# EUROPEAN PATENT SPECIFICATION

(11) **EP 3 831 648 B1**
(45) Date of publication and mention of the grant of the patent: **07.06.2023**
(21) Application number: 20210370.1
(22) Date of filing: 27.11.2020
(51) Int. Cl.: B60N 2/24, B60N 2/015, B60N 2/14

(54) **PASSENGER SEAT ASSEMBLY FOR A DOUBLE CABIN LIGHT COMMERCIAL VEHICLE**
FAHRGASTSITZANORDNUNG FÜR EIN LEICHTES NUTZFAHRZEUG MIT DOPPELKABINE
ENSEMBLE SIÈGE DE PASSAGER POUR VÉHICULE COMMERCIAL LÉGER À CABINE DOUBLE

(30) Priority: 04.12.2019 NL 2024373
(43) Date of publication of application: 09.06.2021
(73) Proprietor: Snoeks Automotive B.V., 2153 NC Nieuw-Vennep (NL)
(72) Inventor: Cappendijk, Johan, 2153 NC Nieuw- Vennep (NL); Romijn, Joris, 2153 NC Nieuw Vennep (NL)
(74) Representative: Arnold & Siedsma

(56) References cited:
- EP-A1- 2 965 943
- DE-B3-102012 007 279
- DE-U1- 20 312 277
- US-A1- 2005 168 022
- US-A1- 2014 042 791

## Description

The present invention relates to a a double cabin light commercial vehicle comprising a passenger seat assembly , wherein said seat assembly comprises a backrest part and a seating part forming a seating construction, and at least two rigid beams for holding and securing said seating construction in position and capable of absorbing rear, front and side impact forces exerted on the passenger seat assembly during a collision.

Small delivery vans or trucks, also known also light commercial vehicles are transport vehicles that are being used to transport cargo. Such vehicles are also known in the art as N category vehicles. These vehicles (or vans) can be comprised of a double cabin construction wherein one part of the van is a passenger compartment and the other part is a cargo compartment, and wherein these compartments are being separated by a separation wall separating the cargo from the passengers. A sliding door at the side of the vehicle provides access to the passenger compartment. These so called double cabin vehicles may serve to transport goods and at the same time transport a limited number of people. The passenger compartment contains at least two passenger seat assemblies, whereby the front seat assembly is provided for the driver and possibly one or two additional passengers. The rear seat(s) are arranged to be able to further transport three or four passengers, depending on the lay-out of the vehicle. Factory supplied seating constructions are fixed to the floor body of the van for support of the seating, retaining the seats and passengers during an accident, and further durability of the seating construction.

Regulatory acts for motorized vehicles seek to ensure a high level of road safety. In Europe motor vehicles are categorized in several categories, of which M1 and N1 are two of the most commercially important categories. Category N are considered motor vehicles with at least four wheels designed and constructed for the carriage of goods, wherein category N1 are considered vehicles designed and constructed for the carriage of goods and having a maximum mass not exceeding 3,5 tonnes (i.e. small delivery vans or trucks, also known also light commercial vehicles). Category M are considered motor vehicles with at least four wheels designed and constructed for the carriage of passengers, wherein category M1 are considered vehicles designed and constructed for the carriage of passengers and comprising no more than eight seats in addition to the driver's seat (i.e. regular passenger cars including SUVs, MPV, small vans, etc).

Double cabin vehicles generally have two rows of seats and a cargo space. In general light commercial vehicles such as small delivery vans need to be converted to double cabin vehicles having the additional row of seats (in addition to the front seats) and having a separation wall between the passenger compartment and the cargo compartment. The possibility to add an additional row of seats in a N1 category delivery vehicle coincides with the additional and stricter safety requirements and demands coming from the market to ensure the safety of the passengers, than normally is required for N1 vehicles. N1 class vehicles may under strict circumstances transport up to seven persons, under the condition that the cargo space remains larger than the passenger space of the vehicle.

Delivery vans or light commercial vehicles can be fitted with a double cabin which is the optimal combination for the efficient transport of both persons and cargo. The seating and separation wall are then fitted into the van, splitting the cabin into two parts. One for cargo transport, and one for transport of persons. However, especially in safety regulations there are large differences to comply with between transportation that is more focussed on cargo (i.e. N1 regulations) and transportation that is more focussed on people ( i.e. M1 regulations) by a motorized vehicle such as light commercial vehicles. Safety regulations are much stricter for vehicles in the M1 category than in the N1 category, since M1 is focussed on the transport of persons instead of transportation of goods/services. To obtain an M1 approval of a vehicle, the entire vehicle as a whole should meet a series of EU directives, regulation and testing requirements. M1 vehicles therefore have a reinforced floor parts, pillars and posts and all comprise mounting points for passenger seats and safety belts. In M1 vehicles these seats are attached to the reinforced floor and a large part of the safety belt systems are attached to the reinforced pillars. In contrast N1 vehicles do not comprise reinforced floors or pillars and are not accommodated for additional passenger seats or safety belts (other than the front row seating).

US200050168022A1 discloses an auxiliary seating unit for a vehicle with a bed for a pickup truck or all terrain vehicle which are stable, comfortable, and attractive. The seating unit is designed with seats mounted to a support frame, the support frame having portions which rest squarely atop the vehicle's bed surface, while upper portions of the frame juxtapose and reversibly attach to the upper margins of the vehicle's bed fence. Seats are securely attached to and supported by seat supports which extend from the portions of the support frame which attach to the vehicle.

In case a delivery vehicle of N1 class (which are all standard delivery vans produced by the large car manufactures) is, next to its goods, also transporting up to eight persons (plus one driver), the vehicle, more specifically the double cabin of the light commercial vehicle must comply with M1 regulations. To achieve M1 approval of a seat in a vehicle, the seat must not only be tested as an individual unit, but also as a complete full system installed in the vehicle which you intend to fit the seats into. Furthermore, these back seat assemblies must be capable of absorbing the large forces that occur in case of a collision and be tested in dynamic force crash tests according to M1 regulations in view of intense deceleration of forces being exerted on the seat assembly. In connection with this the presence of a separation wall behind the seat assembly for stopping the cargo present in the vehicle being a threat to the back passengers in case of a collision is a further requirement in various countries.

Regulations on sitting positions and seat arrangement during frontal, side and rear impacts for M1 vehicle are much stricter in comparison to N1 vehicles. Present N1 safety test are focused on frontal impact without taking into account rear and side impacts. Present light commercial vehicles (N1 class) having a double cabin have a rear seating construction which can absorb strong pulling forces related to a frontal impact, however are extremely weak in rear and side impact forces. Furthermore, current seating is connected to the bottom body of the vehicle, which leads to deformation and vertical movement of the seating (and its passengers) on frontal impact. Since the floor portion to which the rear seats are connected to is not originally intended for the mounting of seats, it comprises no additional strengthening and safety precautions and during a collision the floor holding the seats and its occupants may break away due to the high forces on the seating construction. Due to the high costs, tax and complexity involved in these safety regulations and technical requirements, there are at present no double cabin vehicles which comply with the M1 safety regulations or with both N1 and M1 safety requirements and are allowed to transport, next to cargo, also transport up to eight passengers.

Passenger seat constructions are generally heavy constructions that are securely fastened (often bolted) to reinforced sections of the body floor of a light commercial vehicle, such as a van. When installing additional rear passenger seats in a delivery van (being of N1 class), often converters are used, to make reinforcements in the floor body of the vehicle for securing the seats to reduce movement of the seating in case passengers are being seated. Although such a construction is very strong in a forward direction, it provides limited safety protection in side or rear impact collisions, and is therefore unsuitable to cope with the large forces and dynamic impact as the result of such collisions. Therefore light commercial vehicles (of N1 class) comprising a double cabin at present do not comply with M1 safety regulation to ensure, in the addition of good, the safe transportation of a large number of people. US2005168022 shows a seat which is attached to beams which are attached to the walls of a loading platform of a pickup. DE 102012007279 shows two beams to which one seat is attached wherein these beams are attached to a rear wall of a cabin of a military vehicle.

Considering the above, there is a need in the art for the provision of a simple cost effective passenger seat assembly for a double cabin light commercial vehicle, preferably of N1 class, which meets the technical requirements and safety regulations to transport both cargo and up to eight passengers, according to M1 safety requirements. Furthermore, there is a need for a seating construction suitable for double cabin light commercial vehicle that provides improved safety protection in front impact, but more specifically side or rear impact collisions and is able to cope with the large forces and dynamic impact as the result of such collisions.

It is an object of the present invention, amongst other objects, to address the above need in the art. The object of present invention, amongst other objects, is met by the present invention as outlined in the appended claims.

The present passenger seat assembly for a double cabin light commercial vehicle comprises a backrest part and a seating part forming a seating construction, and at least two rigid beams for holding and securing said seating construction in position and capable of absorbing rear, front and side impact forces exerted on the passenger seat assembly during a collision, wherein the at least two rigid beams each comprise a first and a second longitudinal end, and wherein both longitudinal ends of the at least two rigid beams are in anchored connection with a C-pillar or D-pillar of the vehicle, preferably the C-pillar, wherein the at least two rigid beams are positioned parallel with respect to each other, and wherein the passenger seat assembly is not in an anchored connection to a floor portion of the vehicle.

The passenger seat assembly can be mounted in a light commercial vehicle of N1 category, without the need to further reinforce floor parts or reinforced connection point in the floor, posts or other sections of the body of the vehicle, or to use specific adaptors to mount the assembly to. In this case the N1 vehicle comprises the passenger seat assembly, which complies to the safety requirements of M1 category, i.e. the passenger seat assembly is of M1 category. The assembly is simple, cost and weight effective and provides for retention of the entire seat construction together with their occupants without the need for firm anchorage to the floor portion of the vehicle. Due to the construction of these rigid beams and the bench frame bein g fully attached and supported by these beams, there is no need for fixation on the floor of the vehicle, which greatly improves the easy of installation and assembly of the seat in the vehicle due to the minimum of anchorage and connection points and reduction of weight of the simple construction. The one-piece rigid construction of the beams prevent movement and/or rotation of the benchframe in all directions and ensure an evenly distribution of the load on the anchorage points at the C-pillar of the vehicle. Due to this layout, the passenger seat construction can withstand much larger forces than the traditional constructions used in double cabin light commercial vehicles and can handle such forces in front, rear and side directions. The construction has proven itself during tests, exceeding the requirements for passenger vehicles in the EU and in the USA. Occupants are therefore safer in crashes from the front, side and/or rear when seated on the passenger seat construction.

Pillars are the vertical or near vertical supports of a vehicles window area, designated respectively as the A, B, C or D-pillar, moving from front to rear, The C-pillar is defined as the vertical support dividing a vehicle's rear window from its rear windscreen, or, if the car has an additional window and D-pillar, the support dividing the central and rear windows. The pillar is typically a closed steel structure welded at the bottom to the vehicles and floorpan, as well as on the top to the roof rail or panel and outer plate body of the vehicle, and the pillar provides structural support to the vehicle and is a large contributor in meeting safety and crash standards. The passenger seat construction is a combination of a high strength bench frame or seating construction comprised of a seating part and a backrest part which is only in anchored connection with the C (or D) pillars of a vehicle through rigid beams which are fastened at two position each side to the C-pillar of the vehicle, and thus not anchored to the bottom body or floor of the vehicle.

An advantage of the seat assembly construction is that said seat assembly is not anchored to the vehicle floor or floor body, but at most in connection to the floor via a support that may support the seating holding the passenger, preferably on the left and right ends of the seating construction. Extensive testing has shown that in case of a front collision, especially at high speeds, the known seating constructions in light commercial vehicles move in upward direction due to the forces exerted on the body and its partial collapse causing said seat or assembly of seats to tilt downwards which would lead to serious injury of the passengers. With the seating assembly, such movement is prevented by the two rigid beams connected tot the firm C-pillar of the vehicle. Furthermore, the seat assembly withstands the forces that occur in case of a collision, which may cause the back seat construction to collapse, which is highly dangerous, with the back passengers being thrown forwards and downwards or in case of a back side collision in backward direction. By securing the seating assembly to the C-Pillar of the vehicle, these movements of the seating are avoided and fully absorbed by the rigid beams securely connected to the C-pillar of the vehicle, preventing collapsing of the seat construction. Furthermore the upward movement of the seating is also resisted at rear impacts and is within the required safety limits.

The two rigid beams are such that during a collision (rear, front and side), deformation of these beams will be reduced to a minimum and within the allowed safety limits, and the force is evenly distributed towards the pillars of the vehicle. The rigid beams are preferably round beams. The rigid beams may also be of squared or triangular shape, or a T-shape, as long as the beam remains rigid. The rigid beams have a thickness of at least 20 mm in diameter, preferably at least 30 mm, more preferably at least 40 mm, most preferably at least 45 mm. The rigid beams are preferably comprised of metal, most preferably steel, but may also be comprised of rigid composite materials and/or rigid polymer materials.

The passenger seat assembly further comprises one or more , preferably three, more preferably four safety seat belt construction(s), preferably one or more three-point or five-point safety belt construction(s), attached to the seating construction only, and not to the body or to the C or D pillars of the vehicle itself. This also means that during a collision, the forces exerted on the safety belts holding the passengers are absorbed by the seating construction and diverted towards the vehicle and must withstand forces that occur in case of a collision, without risk of collapse of the passenger seat assembly.

Disclosed is the passenger seat assembly, wherein the at least two rigid beams are positioned substantially in parallel to the backrest part of the seating construction. Crash tests have shown that the substantial parallel position of the beams in respect to the backrest part of the seating construction prevents the seating construction to be twisted at a rear impact, and thereby improves the safety of the seat assembly.

Disclosed is the passenger seat assembly wherein the seating construction is interposed between the at least two rigid beams.

Disclosed is the passenger seat assembly, wherein the seating construction is in connection with the at least two rigid beams. The connection between seating construction and the beams is preferably via flange connections, which are allowed to deform during collision and absorb part of the forces exerted on the construction during a collision, especially during a rear collision.

Disclosed is the passenger seat assembly, wherein the at least two rigid beams are in connection with the upper edge and lower edge of the backrest part. This upper and lower connection provides the strongest and safest connection of the rigid beams with the seating construction, because of the strong lateral beams (upper and lower) comprising this seating construction. Furthermore, the configuration of the connection to the upper and lower edge of the backrest provides the maximum available loading space of the light commercial vehicle having a double cabin. Furthermore, due to the reduced weight of the construction, the total weight of the vehicle will be less resulting in an increase in loading capacity in terms of weight as compared to known light commercial vehicles having a double cabin.

Disclosed is the passenger seat assembly, wherein the at least two rigid beams each have a length that is equal to or larger than a vertical length of the backrest part.

Disclosed is the passenger seat assembly, wherein the assembly further comprises a support element arranged between the seating part of the passenger seat assembly and the floor portion of the vehicle. The support may have any suitable shape such as U shape, T shape or circular-shape, but preferably this support element is substantially V-shaped. Safety tests have shown that when the assembly further comprises the V-shaped support located under the seating part of the seating construction, especially the forward movements and tilting of the assembly are limited and safety of the occupants is further improved. During a frontal impact the support element will receive large part of the vertical forces exerted on the seat assembly and will divert these forces towards the floor body of the vehicle via the support element.

Disclosed is the passenger seat assembly, wherein at least one longitudinal end per rigid beam has a C-shaped configuration. The C-shape improves to efficiently bride the distance between the seating construction and the C-pillar of the vehicle. This C-shaped configuration ergonomically improves the passengers leg space and passenger comfort and also provides for a more optimal usage of the cargo space of the light commercial vehicle.

Disclosed is the passenger seat assembly, wherein the seating construction provides seating for at least two seats, preferably at least three seats, more preferably at least four seats. The passenger seat assembly complies with M1 regulations for vehicles designed and constructed for the carriage of passengers comprising at most seven seats in addition to the driver's seat (i.e. regular passenger cars including SUVs, MPV, small vans, etc.).

The present inventionrelates to a double cabin light commercial vehicle for transporting cargo and passengers comprising a passenger seat assembly as disclosed,

According to a preferred embodiment, the present invention relates to the double cabin light commercial vehicle, wherein the vehicle is a vehicle of N1 category. This N1 vehicle comprises the passenger seat assembly of present invention, which complies to the safety requirements of M1 category, i.e. the passenger seat assembly is of M1 category. The M1 and N1 categories are further disclosed in EU directive 2007/46/EC.

According to a preferred embodiment, the present invention relates to the double cabin light commercial vehicle, wherein the vehicle, in the addition of transportation of cargo and goods, is also suitable for the transportation of at least 5, more preferably at least 6, most preferably at least 7 persons and/or wherein said vehicle is suitable for the carriage of cargo and goods having a maximum mass of at least 1 tonnes, more preferably at least 2, most preferably at least 3.5 tonnes.

The present invention will be further detailed in the following example and figures wherein:

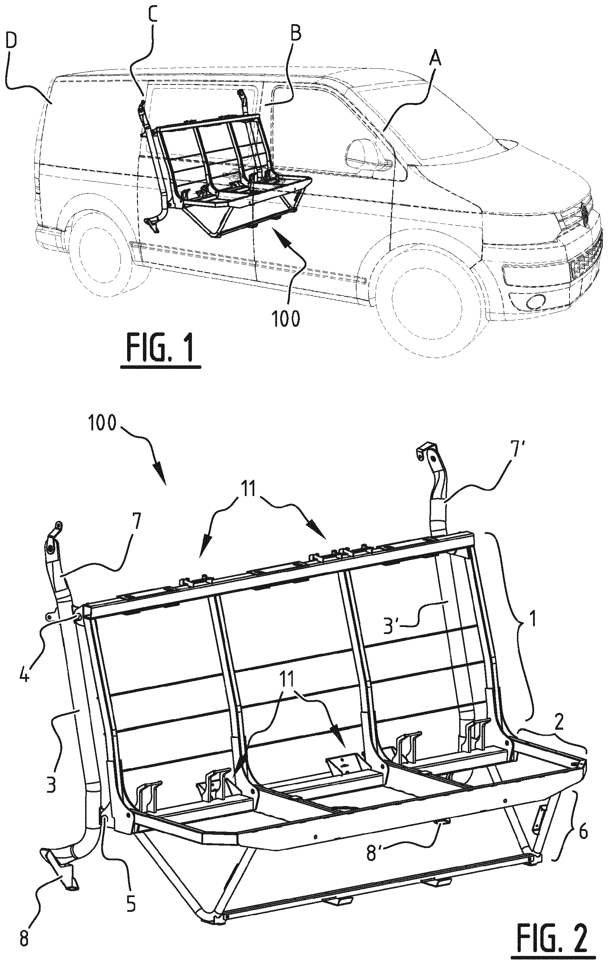

- **Figure 1:**: shows a double cabin light commercial vehicle comprising A, B, C and D pillar and a passenger seat assembly (100). As indicated the passenger seat assembly is connected to the C pillar of the vehicle.
- **Figure 2:**: shows a passenger seat assembly (100), comprising a backrest part (1) and a seating part (2) forming a seating construction for holding the passengers. The assembly further comprises two rigid beams (3, 3') for holding and securing the seating construction in position and capable of absorbing rear, front and side impact forces, especially the rear and frontal impact forces, exerted on the passenger seat assembly (100) during a collision. The two rigid beams (3, 3') are substantially in parallel position in respect to the backrest part (1) of the seating construction and are in connection with the upper edge (4) and lower edge (5) of the backrest part (1). The passenger seat assembly further comprises three point safety seat belt constructions (11) attached to the seating construction.

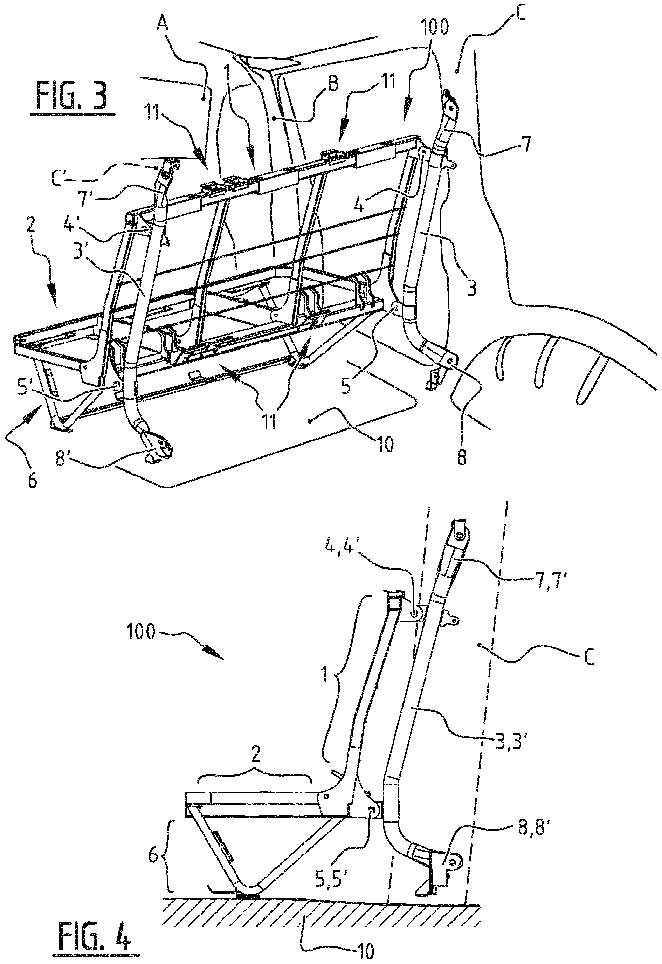

- **Figure 3:**: shows a passenger seat assembly (100) in a double cabin light commercial vehicle, wherein the at least two rigid beams (3, 3') each comprise a first and a second longitudinal end (7, 7' and 8, 8') and wherein both longitudinal ends of the rigid beams are in anchored connection with a C-pillar of the vehicle. The assembly further comprises a substantially V-shaped support element (6) arranged between the seating part (2) of the passenger seat assembly and the floor portion (10) of the vehicle. The passenger seat assembly is not in an anchored connection to a floor portion of the vehicle.
- **Figure 4:**: shows a side view of the passenger seat assembly of figure 3, wherein the dotted lines represent the C-pillar of the vehicle and the first and a second longitudinal end (7, 7' and 8, 8') of the rigid beams are in anchored connection with a C-pillar of the vehicle and not to the floor body of the vehicle. The assembly further comprises a substantially V-shaped support element (6) supporting the seating part of the passenger seat assembly and further improving safety of the assembly, since the rear, side and forward movements of the assembly are limited and safety of the occupants is further improved during side, rear and frontal impact.

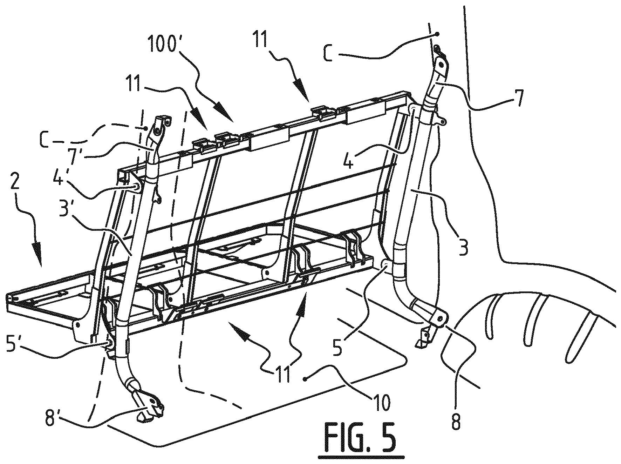

- **Figure 5:**: shows a passenger seat assembly fully supporting by the two rigid beams (3, 3') anchored to the C-pillar, and not in an anchored connection to a floor portion of the vehicle, without the support element (6).

### Example

### Dynamic crash simulations

To comply with European M1 requirements, dynamic forward and backward testing have been performed. The ECE R14 test was carried out to test the safety of the seating assembly disclosed herein. There seat geometry for optimum safety is based on a benchmark called the "H-point". This is the hip flexion point for an average person and is determined by a test doll (P50 dummies, 75 kg and P95 dummies of 100 kg), which is placed in the seat.

In order to ensure proper operation of the belt system, the anchoring points has to be able to keep the defined tensile stress, which has the same efficiency as if replicated in an accident. The upper shoulder belt and lower pelvic belt on a 3-point belt is secured with a traction device. A traction machine loads the seat with 1350 kg on each belt section, while the seat is exposed to a static load of 20 x weight of the seat in the anchorage points. The seat system is loaded with a total of approx. 9.5 ton, and must be able to keep the load 0.2 sec. without breaking, to be approved. The passenger seat assembly disclosed herein passed this test.

Furthermore the structural deformation of the seating assembly disclosed herein was tested (Model X) and as a control a seating assembly of known model having anchorage points to the floor part of the vehicle (Model A) was also tested for structural deformation. The deformation of the seating construction was monitored at the point of the upper safety belt attachment points, during an ECE R14 test. Assemblies were first tested in forward displacements tests wherein seats are tested with a load of 27000 N per seat (at 100% of the force according to ECE R14), monitoring the forward displacement of the left, right and middle sections of the seating construction due to the force exerted. The even further test the safety of the construction, a second test was performed on both seating assemblies wherein the load was increased to 35000 N per seat (more than 120% of the force according to ECE R14). According to safety regulations, the forward displacement should not exceed 350 mm to pass the tests. Table 1 provides an overview of the test results.

**Table 1. Load versus displacement of the seat construction.**

| | **Displacement (mm)** | | | |
|---|---|---|---|---|
| **27000 N** | | Left seat | Middle seat | Right seat |
| Model A | | 99 | 120 | 115 |
| Model X | | 75 | 101 | 92 |
| | | | | |

| **35000 N** | | Left seat | Middle seat | Right seat |
|---|---|---|---|---|
| Model A | | 260 | 335 | 320 |
| Model X | | 131 | 146 | 126 |

Results show that the displacement of the old model (Model A), both at 27000N and 35000N tests. Especially at high impact collisions the assembly disclosed herein greatly improves the safety of the construction, whereas the old model passed the safety requirements by a minimal margin. For example the displacement detected at the middle seat is 335 mm, where 350 mm max is allowed. In contrast, the displacement of the seat assembly disclosed herein, Model X, outperforms Model A, with a displacement of the middle seat of 146 mm.

Furthermore a dynamic crash simulation was performed on the Model X and Model A passenger seat assembly, wherein the vehicles are subjected to high acceleration and deceleration forces. A rear collision was simulated wherein the vehicle was moving at 80 km/h and decelerated within 100ms. The Model A passenger seat assembly could not withstand the forces of the rear impact and collapsed on impact, whereas the Model X passenger seat assembly remained intact and did not collapse on impact.

## Claims

1. A double cabin light commercial vehicle for transporting cargo and passengers comprising a passenger seat assembly, , wherein said seat assembly (100) comprises a backrest part (1) and a seating part (2) forming a seating construction, and at least two rigid beams (3, 3') for holding and securing said seating construction in position and capable of absorbing rear, front and side impact forces exerted on the passenger seat assembly (100) during a collision, wherein the seating construction provides seating for at least two seats, preferably at least three seats, more preferably at least four seats, and wherein the at least two rigid beams (3, 3') each comprise a first and a second longitudinal end (7, 7', 8, 8'), wherein both longitudinal ends of the at least two rigid beams (3, 3') are adapted to be in anchored connection with a C-pillar (C) or D-pillar (D) of the vehicle, preferably the C-pillar, wherein the at least two rigid beams (3, 3') are positioned parallel with respect to each other, and wherein the passenger seat assembly (100) is not in an anchored connection to a floor portion (10) of the vehicle.

2. Double cabin light commercial vehicle according to claim 1, wherein the at least two rigid beams (3, 3') are positioned substantially in parallel to the backrest part (1) of the seating construction.

3. Double cabin light commercial vehicle according to claim 1 or 2, wherein the seating construction is interposed between the at least two rigid beams (3, 3').

4. Double cabin light commercial vehicle according to any one of claims 1 to 3, wherein the seating construction is in connection with the at least two rigid beams (3, 3').

5. Double cabin light commercial vehicle according to according to any one of claims 1 to 4, wherein the at least two rigid beams (3, 3') are in connection with the upper edge (4) and lower edge (5) of the backrest part (1).

6. Double cabin light commercial vehicle according to any one of claims 1 to 5, wherein the at least two rigid beams (3, 3') each have a length that is equal to or larger than a vertical length of the backrest part (1).

7. Double cabin light commercial vehicle according to any one of the claims 1 to 6, wherein the assembly further comprises a support element (6) arranged between the seating part (2) of the passenger seat assembly (100) and the floor portion (10) of the vehicle.

8. Double cabin light commercial vehicle according to any one of the claims 1 to 7, wherein at least one longitudinal end per rigid beam has a C-shaped configuration

9. Double cabin light commercial vehicle according to any of the preceding claims, wherein the vehicle is a vehicle of N1 category.

10. Double cabin light commercial vehicle according to claim 9, wherein the vehicle, in the addition of transportation of cargo and goods, is also suitable for the transportation of at least 5, more preferably at least 6, most preferably at least 7 persons.

11. Double cabin light commercial vehicle according to claim 9 or 10, wherein said vehicle is suitable for the carriage of cargo and goods having a maximum mass of at least 1 tonnes, more preferably at least 2, most preferably at least 3,5 tonnes.

## Patentansprüche

1. Ein leichtes Nutzfahrzeug mit Doppelkabine zum Transportieren von Fracht und Passagieren, das eine Passagiersitzanordnung aufweist, wobei die Sitzanordnung (100) ein Rückenlehnenteil (1) und ein Sitzteil (2), die eine Sitzkonstruktion bilden, und mindestens zwei starre Träger (3, 3') zum Halten und Sichern der Sitzkonstruktion in ihrer Position aufweist, und die in der Lage ist, Heck-, Front- und Seitenaufprallkräfte zu absorbieren, die während einer Kollision auf die Passagiersitzanordnung (100) ausgeübt werden, wobei die Sitzkonstruktion Sitzplätze für mindestens zwei Sitze, bevorzugt für mindestens drei Sitze, besonders bevorzugt für mindestens vier Sitze bietet, und wobei die mindestens zwei starren Träger (3, 3') jeweils ein erstes und ein zweites Längsende (7, 7', 8, 8') aufweisen,
wobei beide Längsenden der mindestens zwei starren Träger (3, 3') ausgebildet sind, um in verankerter Verbindung mit einer C-Säule (C) oder D-Säule (D), bevorzugt der C-Säule, des Fahrzeugs zu stehen, wobei die mindestens zwei starren Träger (3, 3') parallel zueinander angeordnet sind, und wobei die Beifahrersitzanordnung (100) nicht in einer verankerten Verbindung mit einem Bodenabschnitt (10) des Fahrzeugs steht.

2. Das leichte Nutzfahrzeug mit Doppelkabine nach Anspruch 1, wobei die mindestens zwei starren Träger (3, 3') im Wesentlichen parallel zum Rückenlehnenteil (1) der Sitzkonstruktion angeordnet sind.

3. Das leichte Nutzfahrzeug mit Doppelkabine nach Anspruch 1 oder 2, wobei die Sitzkonstruktion zwischen den mindestens zwei starren Trägern (3, 3') eingefügt ist.

4. Das leichtes Nutzfahrzeug mit Doppelkabine nach einem der Ansprüche 1 bis 3, wobei die Sitzkonstruktion in Verbindung mit den mindestens zwei starren Trägern (3, 3') ist.

5. Das leichte Nutzfahrzeug mit Doppelkabine nach einem der Ansprüche 1 bis 4, wobei die mindestens zwei starren Träger (3, 3') mit der Oberkante (4) und der Unterkante (5) des Rückenlehnenteils (1) in Verbindung sind.

6. Das leichte Nutzfahrzeug mit Doppelkabine nach einem der Ansprüche 1 bis 5, wobei die mindestens zwei starren Träger (3, 3') jeweils eine Länge aufweisen, die gleich oder größer ist als eine vertikale Länge des Rückenlehnenteils (1).

7. Das leichte Nutzfahrzeug mit Doppelkabine nach einem der Ansprüche 1 bis 6, wobei die Baugruppe ferner ein Stützelement (6) aufweist, das zwischen dem Sitzteil (2) der Beifahrersitzbaugruppe (100) und dem Bodenabschnitt (10) des Fahrzeugs angeordnet ist.

8. Das leichte Nutzfahrzeug mit Doppelkabine nach einem der Ansprüche 1 bis 7, wobei mindestens ein Längsende jedes starren Trägers eine C-förmige Ausgestaltung hat.

9. Das leichte Nutzfahrzeug mit Doppelkabine nach einem der vorhergehenden Ansprüche, wobei das Fahrzeug ein Fahrzeug der Klasse N1 ist.

10. Das leichte Nutzfahrzeug mit Doppelkabine nach Anspruch 9, wobei das Fahrzeug zusätzlich zum Transport von Fracht und Gütern auch für den Transport von mindestens 5, bevorzugt mindestens 6, besonders bevorzugt mindestens 7 Personen geeignet ist.

11. Das leichte Nutzfahrzeug mit Doppelkabine nach Anspruch 9 oder 10, wobei das Fahrzeug für die Beförderung von Fracht und Gütern mit einer maximalen Masse von mindestens 1 Tonne, bevorzugt von mindestens 2 Tonnen und besonders bevorzugt von mindestens 3,5 Tonnen geeignet ist.

## Revendications

1. Véhicule commercial léger à double cabine destiné à transporter une cargaison et des passagers comprenant un ensemble de siège de passager, dans lequel ledit ensemble de siège (100) comprend une partie de dossier (1) et une partie de siège (2) formant une construction de siège, et au moins deux montants rigides (3, 3') destinés à maintenir et à fixer ladite construction de siège en position et capables d'absorber des chocs arrière, avant et latéraux exercés sur l'ensemble de siège de passager (100) au cours d'une collision, dans lequel la construction de siège fournit des sièges pour au moins deux sièges, de préférence, au moins trois sièges, plus préférablement, au moins quatre sièges, et dans lequel les au moins deux montants rigides (3, 3') comprennent chacun une première et une seconde extrémités longitudinales (7, 7', 8, 8'), dans lequel les deux extrémités longitudinales des au moins deux montants rigides (3, 3') sont adaptées de manière à présenter une liaison ancrée sur un pilier C (C) ou un pilier D (D) du véhicule, de préférence, le pilier C, dans lequel les au moins deux montants rigides (3, 3') sont positionnés parallèlement l'un par rapport à l'autre, et dans lequel l'ensemble de siège de passager (100) ne présente pas de liaison ancrée sur une partie de plancher (10) du véhicule.

2. Véhicule commercial léger à double cabine selon la revendication 1, dans lequel les au moins deux montants rigides (3, 3') sont positionnés sensiblement parallèlement à la partie de dossier (1) de la construction de siège.

3. Véhicule commercial léger à double cabine selon la revendication 1 ou 2, dans lequel la construction de siège est interposée entre les au moins deux montants rigides (3, 3').

4. Véhicule commercial léger à double cabine selon l'une quelconque des revendications 1 à 3, dans lequel la construction de siège est en liaison avec les au moins deux montants rigides (3, 3').

5. Véhicule commercial léger à double cabine selon l'une quelconque des revendications 1 à 4, dans lequel les au moins deux montants rigides (3, 3') sont en liaison avec le bord supérieur (4) et le bord inférieur (5) de la partie de dossier (1).

6. Véhicule commercial léger à double cabine selon l'une quelconque des revendications 1 à 5, dans lequel les au moins deux montants rigides (3, 3') présentent chacun une longueur qui est supérieure ou égale à une longueur verticale de la partie de dossier (1).

7. Véhicule commercial léger à double cabine selon l'une quelconque des revendications 1 à 6, dans lequel l'ensemble comprend, en outre, un élément de support (6) agencé entre la partie de siège (2) de l'ensemble de siège de passager (100) et la partie de plancher (10) du véhicule.

8. Véhicule commercial léger à double cabine selon l'une quelconque des revendications 1 à 7, dans lequel au moins une extrémité longitudinale par montant rigide présente une configuration en forme de C.

9. Véhicule commercial léger à double cabine selon l'une quelconque des revendications précédentes, dans lequel le véhicule est un véhicule de catégorie N1.

10. Véhicule commercial léger à double cabine selon la revendication 9, dans lequel le véhicule, en plus du transport de cargaison et de marchandises, est aussi approprié pour le transport d'au moins 5, plus préférablement, d'au moins 6, le plus préférablement, d'au moins 7 personnes.

11. Véhicule commercial léger à double cabine selon la revendication 9 ou 10, dans lequel ledit véhicule est adapté au transport de cargaison et de marchandises présentant une masse maximum d'au moins 1 tonne, plus préférablement, d'au moins 2, le plus préférablement, d'au moins 3,5 tonnes.
